# EUROPEAN PATENT SPECIFICATION

(11) **EP 2 534 435 B1**
(45) Date of publication and mention of the grant of the patent: **04.09.2013**
(21) Application number: 10810932.3
(22) Date of filing: 15.12.2010
(51) Int. Cl.: F25D 31/00, F25D 25/02, A01N 1/02

(54) **FAST FREEZER FOR BAGS WITH DETECTION OF THE BAG TEMPERATURE**
GEFRIERGERÄT FÜR GEFRIERBEUTEL MIT DETEKTION DER BEUTELTEMPERATUR
CONGÉLATEUR POUR SACS DE CONGELATION AVEC UNE DETECTION DE LA TEMPERATURE DESDITS SACS

(30) Priority: 12.02.2010 IT MI20100218
(43) Date of publication of application: 19.12.2012
(73) Proprietor: Angelantoni Life Science S.R.L also know as ALS S.R.L., 06056 Massa Martana (PG) (IT)
(72) Inventor: APREA, Ciro, I-80124 Napoli (IT); ASCANI, Maurizio, I-06056 Massa Martana (PG) (IT); RAGNI, Maurizio, I-06127 Perugia (IT); ZAMPORLINI, Alessandra, I-06059 Pantalla di Todi (PG) (IT)
(74) Representative: Lampis, Marco
(86) International application number: PCT/IB2010/055837
(87) International publication number: WO 2011/098872

(56) References cited:
- FR-A1- 2 632 391

## Description

The present invention relates to a fast freezer for fluids inside bags, in particular bags of plasma and a method for checking for correct freezing of the bags. Fast freezers for fluids inside bags which use a "contact" system for freezing are known in the prior art. A freezer according to the preamble of claim 1 is known, for example from FR 2 632 391 A1. These freezers comprise a plurality of shelves arranged above each other and individually refrigerated (for example to a temperature of - 75°C), each being associated with a non-refrigerated metal plate, called a uniformity plate, which is arranged above the shelf so as to rest thereon and which is hinged so as to be able to be raised from the surface of the shelf, allowing the bags to be arranged on or removed from the shelf itself.

During "idle" operation of the machine each uniformity plate is pre-cooled by contact with the respective refrigerated shelf. The bags to be frozen are then placed in an orderly manner on each shelf so that they are compressed between the shelf and the associated uniformity plate.

Initially the uniformity plate "releases cold" to the bags. Subsequently, however, it is the bags which, by means of conduction, cool the uniformity plate. This allows rapid lowering of the temperature of the bag contents.

It is important, however, to know the temperature of the fluid inside the bags. For example, it is important to ensure that the bags reach a desired storage temperature within a predetermined time interval. In the case of bags of plasma, for example, it is envisaged that, in order to guarantee correct storage, they must reach a temperature lower than -30°C within one hour of being introduced into the freezer.

In order to be able to check that the cooling cycle is being performed correctly and be able to detect the end of the cycle (namely reaching of the storage temperature), the use of a dummy bag, or sample bag, which does not contain plasma, but is provided internally with a temperature sensor, has been proposed. Assuming that, during the cooling cycle, the temperatures inside the sample bag and real bags evolve in a substantially similar manner, the sample bag is positioned on a tray together with the normal bags to be frozen and the detection performed by its sensor is used as a measurement of the temperature of the bags, in order to check the time needed to reach the predetermined minimum storage temperature (for example, -30°C).

This system suffers from the drawback that it requires the user to position suitably the sample bag at the start of each freezing cycle. Moreover, the connections between the sensor inside the sample bag and the control and signalling system which manage the freezer may take up space and get in the way during introduction and extraction of the bags. A further drawback is that the use of the sample bags reduces the real loading capacity of the freezer.

The general object of the present invention is to provide a detection method and a freezer for bags, of the type with uniformity plates, which allows easy verification of the storage temperature reached by the bags and reliable checking of the bag cooling cycle.

In view of the above object the idea has arisen to provide, according to the invention, a freezer for fluids inside bags, comprising a freezing chamber containing a plurality of surfaces for storing bags, each surface comprising in turn a refrigerated shelf and an associated uniformity plate arranged above the shelf, the plates being hinged so as to be able to be raised from the respective shelf in order to store bags between the shelf and the plate, characterized in that at least one of the uniformity plates is provided with a temperature sensor for indirectly checking the temperature reached by the bags on the shelf.

Still according to the invention, the idea has arisen to provide a method for checking for correct freezing of bags of fluid inside a freezer of the type comprising a freezing chamber containing a plurality of surfaces for storing bags, each surface comprising in turn a refrigerated shelf and an associated uniformity plate arranged above the shelf, the plates being hinged so as to be able to be raised from the respective shelf in order to store bags between the shelf and the plate, the method comprising the steps of detecting the temperature of at least one zone of a uniformity plate resting on at least one bag and using the value measured as an indication of the temperature reached by the bags on the shelves.

In order to illustrate more clearly the innovative principles of the present invention and its advantages compared to the prior art, an example of embodiment applying these principles will be described below, with the aid of the accompanying drawings. In the drawings:
- Figure 1 shows a partial, schematic perspective view of a freezer designed according to the principles of the invention;
- Figure 2 shows a cross-sectional schematic view of a detail of the freezer according to Figure 1.

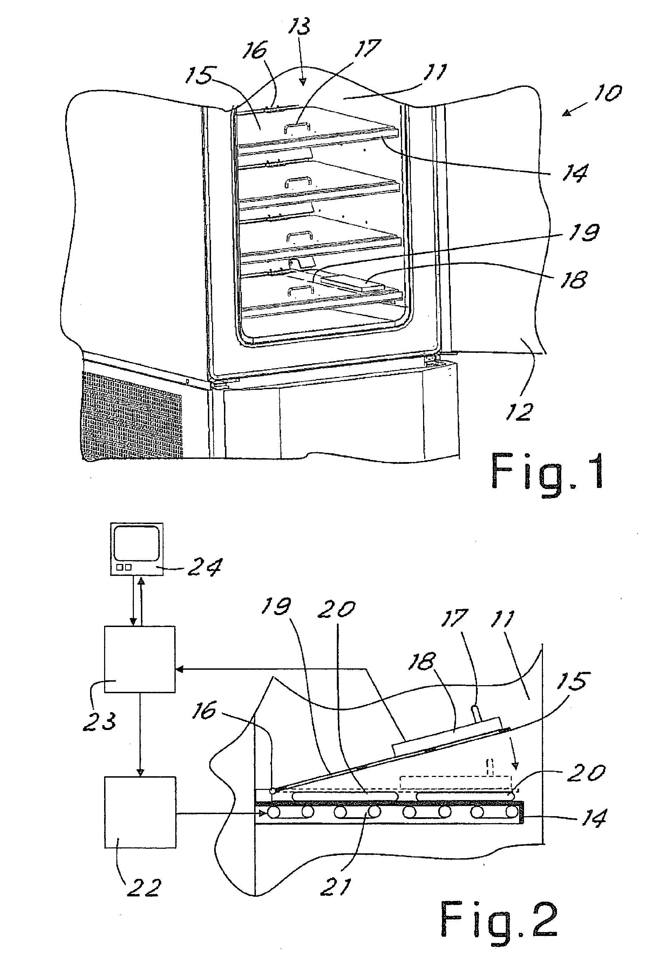

With reference to the figures, Figure 1 shows a freezer, denoted generally by 10, designed according to the invention. The freezer 10 comprises a freezing chamber 11 which is thermally insulated and closed by an access door 12 for the refrigerated storage of fluid inside bags. The chamber contains a plurality of surfaces 13 for the orderly arrangement of the bags to be refrigerated (schematically indicated by 20 in Figure 2). The bags contain biological fluids, in particular plasma, which must be frozen at a predefined temperature within a predetermined time interval in order to be able to guarantee correct storage thereof.

Each surface 13 comprises in turn a refrigerated shelf 14 associated with a uniformity plate 15 made of thermally conductive material and arranged above the shelf so as to rest with its bottom surface against the top surface of the shelf, which is also made of thermally conductive material (for example, anodized aluminium). The plate 15 is hinged at the rear at 16 so that it can be raised from the surface of the shelf by means of a special handle 17.

At least one of the uniformity plates is provided with a temperature sensor 18 advantageously positioned on the top surface of the plate in order to detect the temperature of said surface. The sensor 18 may advantageously have a length approximately comparable to the dimensions of a bag which can be stored between plate and shelf. For this purpose, the sensor may be of the composite type, namely formed for example by several sensors distributed at various points along said length and connected so as to have a temperature measurement which is the mean of the temperatures detected at these points. The position of the sensor 18 on the plate advantageously coincides with the underlying position for storing a bag on the associated shelf, as can be seen more clearly in Figure 2. In particular, the zone of the plate which contains the sensor is close to a side edge of the plate.

As can be seen again in Figure 1 and, more clearly in Figure 2, the zone of the uniformity plate containing the sensor 18 is advantageously defined by incisions 19 which are formed in the plate at least in the transverse direction (namely in the direction transverse to the rear hinging axis of the plate and to the access opening of the freezing chamber 11). The incisions 19 have the function of reducing the heat transmission between the plate zone supporting the sensor and the rest of the plate so that the temperature detected is influenced minimally by external factors. It is obviously possible to use one or more sensors 18 for each shelf inside the freezer. However, to avoid having to measure the temperature on each shelf, it has been found to be advantageous to position the sensor 18 only on the uniformity plate resting on the shelf where the bags reach last the desired storage temperature. The position of this shelf inside the chamber 11 depends on the constructional characteristics of the freezer and can be easily determined at the design stage. Usually the configuration of the system and the freezing chamber is such that the bags placed on the bottom shelf are the last to freeze and therefore usually the sensor is positioned on the plate of this bottom shelf.

Obviously, in the case of a sensor on a single uniformity plate, loading of the bags must be performed preferably starting from the shelf associated with said plate.

In this way, if loading of the bags is performed starting from the shelf provided with the sensor and, in particular, from the zone situated underneath the sensor, there is the guarantee, by means of the measurement performed on a single shelf, that "safety" conditions exist also for the bags situated on the other shelves.

As schematically shown in Figure 2, the bags (arranged for example in an orderly manner in rows and columns on each shelf) are compressed between the plate and the shelf. The hinging axis 16 may also be provided with a known articulation (not shown) so as to adapt automatically the distance between plate and shelf depending on the thickness of the bags inserted between them, so as to keep the facing surfaces of plate and shelf substantially parallel. In this way, when there are no bags at all, the plate may be rested with its bottom surface in contact with the top surface of the shelf, while when the bags are present it may press uniformly against the bags themselves, compressing them with its weight against the shelf. A spring for providing an additional thrusting force may also be provided.

As can be seen schematically in Figure 2, the metal surface of each shelf is cooled by a cooling circuit 21 which forms part of a known refrigeration system 22 which can be easily imagined by the person skilled in the art and therefore need not be further illustrated and described here. The cooling temperature of the shelves may be advantageously in the region of -75°C.

The sensor 18 is connected to an electronic system 23 for controlling operation of the freezer, which is equipped with a device or console 24 for displaying and entering commands and which is accessible from the outside of the freezer. The control system (for example of the type with suitably programmed microprocessor) and the display and command device (for example equipped with monitor, display and/or indicator lamps and command keyboard and/or pushbuttons) are known per se and can be easily imagined by the person skilled in the art. They shall therefore not be further shown or described here.

During use of the freezer, after the known stage of idle pre-cooling of the freezer (with all the uniformity plates resting against the respective refrigerated shelf), the bags may be loaded in an orderly manner on the shelves, starting from the position where the sensor 18 is present.

The control system checks the temperature detected by the sensor so as to be able to determine that the desired temperature for storage of the bags has been reached within the set time interval.

Usually the temperature detected will first show an increase due to the initial release of heat to the plate by the bag situated underneath the sensor. After this, the temperature detected will start to drop following transmission of heat between plate, bag and refrigerated shelf. The values recorded during this temperature drop provide an indication of the temperature of the bags being cooled. Obviously, the temperature detected will generally be lower than the real temperature of the bags, but the difference may be easily taken into account during calibration of the system. There is in fact no need for a precise measurement of the temperature reached by the bags, but an indication that a threshold value for correct storage (for example, -30°C) has at least been reached. It may thus be considered that at least one predetermined temperature for storage of the bags has been reached when the temperature detected by the sensor is less than said storage temperature by a given amount. For example, it has been found that, when in the freezer described the temperature sensor on the plate indicates a temperature of less than - 40°C, there is the certainty that the underlying bag is at a temperature lower than - 30°C. The predefined amount for the temperature difference is therefore advantageously -10°C.

The control system may therefore detect (and if necessary signal by means of the device 24) that the storage temperature has been reached and check that the time taken is in keeping with the predetermined parameters, for example that it takes less than one hour to reach -30°C, as stipulated by the standards for the storage of bags of plasma. The result of this check may also be indicated on the device 24 and if necessary stored for future use.

With the method according to the invention it may be considered that the predetermined freezing temperature of the bags has been correctly reached if the temperature recorded in the given plate zone reaches a value lower than said freezing temperature by the predefined amount within a predefined time interval (advantageously one hour) following introduction of the bags into the freezer.

It is therefore possible to know indirectly whether the bags of plasma have been correctly frozen.

At this point it is clear how the predefined objects have been achieved, by providing a freezer for bags in which indirect verification of the temperature of the bags of plasma is obtained by means of measurement of the temperature of specific point or zone of at least one uniformity plate, resulting in the certainty of obtaining, for example, a value indicating that a real threshold temperature for correct storage of the bags has been reached.

The system according to the invention does not reduce the useful space inside the freezer and does not require the user to perform particular operations, apart from that of loading the bags of plasma starting from a certain predetermined position. This therefore results in easier use compared to the known systems which use sample bags with internal sensors.

Obviously, the above description of an embodiment applying the innovative principles of the present invention is provided by way of example of these innovative principles and must therefore not be regarded as limiting the scope of the rights claimed herein. For example, as mentioned above, several sensors may be provided on the same plate or on or more than one plate, so as to have more extensive measurements of the temperature, which may then be suitably processed, if necessary, by means of the freezer control system. Moreover, although a shelf with two bags aligned along the depth is shown (for example, intended for bags of the "detachable" type), it is also possible to store different size bags, for example bags which have a length corresponding to the full depth of the shelf, as for example in the case of plasmapheresis or apheresis bags.

The incision in the uniformity plate extending along the whole working depth of the plate (as, for example, shown in the figures) allows isolation of the plate zone intended to store two bags or the long bag and in this way allows in both cases correct measurement by the sensor.

## Claims

1. Freezer for fluids inside bags, comprising a freezing chamber (11) containing a plurality of surfaces (13) for storing bags (20), each surface comprising in turn a refrigerated shelf (14) and an associated uniformity plate (15) arranged above the shelf, the plates (15) being hinged so as to be able to be raised from the respective shelf in order to store bags between the shelf and the plate, **characterized in that** at least one of the uniformity plates (15) is provided with a temperature sensor (18) for indirect verification of the temperature reached by the bags on the shelf.

2. Freezer according to Claim 1, **characterized in that** the sensor (18) is connected to a system (23) for controlling operation of the freezer which detects with this sensor that a given storage temperature of the bags has been reached within a predefined time interval.

3. Freezer according to Claim 1, **characterized in that** the sensor (18) is arranged on the plate (15) in order to measure the temperature of a predetermined zone of the plate.

4. Freezer according to Claim 3, **characterized in that** the predetermined zone is a zone close to a side edge of the plate.

5. Freezer according to Claim 3, **characterized in that** the predetermined zone is at least partially defined by incisions (19) in the plate.

6. Freezer according to Claim 1, **characterized in that** the plate with the sensor (18) is the plate associated with the lowest shelf inside the chamber (11).

7. Method for checking for correct freezing of bags of fluid inside a freezer of the type comprising a freezing chamber (11) containing a plurality of surfaces (13) for storing bags (20), each surface comprising in turn a refrigerated shelf (14) and an associated uniformity plate (15) arranged above the shelf, the plates (15) being hinged so as to be able to be raised from the respective shelf in order to store bags between the shelf and the plate, the method **characterized by** comprising the steps of detecting the temperature of at least one zone of a uniformity plate resting on at least one bag and using the value measured as an indication of the temperature reached by the bags on the shelves.

8. Method according to Claim 7, wherein it is considered that a predetermined storage temperature of the bags has been reached when the temperature detected in the said plate zone is less than said predetermined storage temperature by a predefined amount.

9. Method according to Claim 8, wherein it is considered that the predetermined storage temperature is equal to or less than -30°C and the predefined amount is at least -10°C.

10. Method according to Claim 7, wherein it is considered that the predetermined storage temperature of the bags has been correctly reached if the temperature detected in the said plate zone reaches a value lower than said predetermined storage temperature by said predefined amount within a predefined time interval following introduction of the bags into the freezer.

## Patentansprüche

1. Tiefkühler für Flüssigkeiten in Beuteln, umfassend eine Gefrierkammer (11) mit einer Vielzahl von Flächen (13) zur Lagerung von Beuteln (20), wobei jede Fläche wiederum ein Kühlfach (14) und eine dazugehörige Egalisierungsplatte (15) umfasst, die über dem Fach angeordnet ist, wobei die Platten (15) mit einem Scharnier versehen sind, so dass sie vom jeweiligen Fach angehoben werden können, um zwischen Fach und Platte Beutel zu lagern, **dadurch gekennzeichnet, dass** mindestens eine der Egalisierungsplatten (15) mit einem Temperaturfühler (18) ausgestattet ist für die indirekte Überprüfung der von den Beuteln im Fach erreichten Temperatur.

2. Tiefkühler nach Anspruch 1, **dadurch gekennzeichnet, dass** der Fühler (18) an ein System (23) zur Funktionskontrolle des Tiefkühlers angeschlossen ist, das mit Hilfe dieses Fühlers erkennt, wenn eine bestimmte Lagertemperatur der Beutel innerhalb eines vorher bestimmten Zeitintervalls erreicht ist.

3. Tiefkühler nach Anspruch 1, **dadurch gekennzeichnet, dass** der Fühler (18) auf der Platte (15) angeordnet ist, um die Temperatur eines vorher bestimmten Bereichs der Platte zu messen.

4. Tiefkühler nach Anspruch 3, **dadurch gekennzeichnet, dass** der vorher bestimmte Bereich nahe einer Seitenkante der Platte liegt.

5. Tiefkühler nach Anspruch 3, **dadurch gekennzeichnet, dass** der vorher bestimmte Bereich zumindest teilweise durch Kerben (19) in der Platte festgelegt wird.

6. Tiefkühler nach Anspruch 1, **dadurch gekennzeichnet, dass** es sich bei der Platte mit dem Fühler (18) um die Platte handelt, die mit dem untersten Fach in der Kammer (11) verbunden ist.

7. Verfahren zur Überprüfung der korrekten Tiefkühlung von Flüssigkeitsbeuteln in einem Tiefkühler des Typs, der eine Tiefkühlkammer (11) umfasst, die eine Vielzahl von Flächen (13) zur Lagerung von Beuteln (20) beinhaltet, wobei jede Fläche wiederum ein Kühlfach (14) und eine dazugehörige Egalisierungsplatte (15) umfasst, die oberhalb des Fachs angeordnet ist, wobei die Platten (15) mit einem Scharnier versehen sind, so dass sie vom jeweiligen Fach angehoben werden können, um zwischen Fach und Platte Beutel zu lagern, wobei das Verfahren **dadurch gekennzeichnet ist, dass** es die Schritte des Erkennens der Temperatur in mindestens einem Bereich einer Egalisierungsplatte umfasst, die auf mindestens einem Beutel aufliegt, und der Verwendung der Messwert als ein Hinweis auf die Temperatur, die die Beutel im Fach erreicht haben.

8. Verfahren nach Anspruch 7, wobei in Betracht gezogen wird, dass eine vorher bestimmte Lagertemperatur der Beutel erreicht ist, wenn die imPlattenbereich erkannte Temperatur um einen vorher festgelegten Wert niedriger ist als die vorher bestimmte Lagertemperatur.

9. Verfahren nach Anspruch 8, wobei in Betracht gezogen wird, dass die vorher bestimmte Lagertemperatur gleich -30 °C ist oder darunter liegt und der vorher festgelegte Wert mindestens -10 °C beträgt.

10. Verfahren nach Anspruch 7, wobei in Betracht gezogen wird, dass die vorher bestimmte Lagertemperatur der Beutel korrekt erreicht wurde, wenn die im Plattenbereich erkannte Temperatur innerhalb eines vorher bestimmten Zeitintervalls nach dem Einlegen der Beutel in den Tiefkühler einen vorher festgelegten Wert unter der vorher festgelegten Lagertemperatur aufweist.

## Revendications

1. Congélateur pour liquides contenus dans des sacs, qui comprend une chambre de congélation (11) qui contient une pluralité de surfaces (13) destinées à stocker des sacs (20), chaque surface comprenant à son tour une clayette réfrigérée (14) et une plaque d'uniformité associée (15) agencée au-dessus de ladite clayette, lesdites plaques (15) étant articulées de façon à pouvoir être soulevées de ladite clayette respective afin de stocker les sacs entre ladite clayette et ladite plaque, **caractérisé en ce qu'**au moins l'une desdites plaques d'uniformité (15) est équipée d'un capteur de température (18) afin de vérifier la température atteinte par les sacs sur ladite clayette.

2. Congélateur selon la revendication 1, **caractérisé en ce que** ledit capteur (18) est relié à un système (23) destiné à contrôler le fonctionnement dudit congélateur, qui détecte, à l'aide dudit capteur, si une température de stockage donnée desdits sacs a été atteinte dans un intervalle de temps prédéfini.

3. Congélateur selon la revendication 1, **caractérisé en ce que** ledit capteur (18) est placé sur ladite plaque (15) afin de mesurer la température d'une zone prédéterminée de ladite plaque.

4. Congélateur selon la revendication 3, **caractérisé en ce que** ladite zone prédéterminée est une zone proche d'un bord latéral de ladite plaque.

5. Congélateur selon la revendication 3, **caractérisé en ce que** ladite zone prédéterminée est au moins partiellement définie par des incisions (19) dans ladite plaque.

6. Congélateur selon la revendication 1, **caractérisé en ce que** ladite plaque munie dudit capteur (18) est la plaque associée à la clayette inférieure à l'intérieur de ladite chambre (11).

7. Procédé de vérification de la congélation de sacs de liquides à l'intérieur d'un congélateur qui comprend une chambre de congélation (11) qui contient une pluralité de surfaces (13) destinées à stocker des sacs (20), chaque surface comprenant à son tour une clayette réfrigérée (14) et une plaque d'uniformité associée (15) disposée au-dessus de ladite clayette, lesdites plaques (15) étant articulées de façon à pouvoir être soulevées de ladite clayette respective afin de stocker les sacs entre ladite clayette et ladite plaque, ledit procédé étant **caractérisé en ce qu'**il comprend les étapes qui consistent à détecter la température d'au moins une zone d'une plaque d'uniformité qui repose sur au moins un sac, et à utiliser la valeur mesurée comme indication de la température atteinte par lesdits sacs sur lesdites clayettes.

8. Procédé selon la revendication 7, dans lequel il est considéré qu'une température de stockage prédéterminée desdits sacs a été atteinte dès que la température détectée dans ladite zone de plaque est inférieure à ladite température de stockage prédéterminée selon une quantité prédéfinie.

9. Procédé selon la revendication 8, dans lequel il est considéré que ladite température de stockage prédéterminée est égale ou inférieure à -30°C, et ladite quantité prédéfinie est égale à au moins -10°C.

10. Procédé selon la revendication 7, dans lequel il est considéré que ladite température de stockage prédéterminée
desdits sacs a été correctement atteinte si la température détectée dans ladite zone de plaque atteint une valeur inférieure à ladite température de stockage prédéterminée selon ladite quantité prédéfinie dans un intervalle de temps prédéfini qui suit l'introduction desdits sacs dans ledit congélateur.
